# EUROPEAN PATENT APPLICATION

(11) **EP 4 596 170 A1**
(43) Date of publication of application: **06.08.2025**
(21) Application number: 24155191.0
(22) Date of filing: 01.02.2024
(51) Int. Cl.: B23Q 7/04, B24B 13/005, B25J 15/00, B29D 11/00

(54) **GRIPPER DEVICE FOR RELEASABLY HOLDING A LENS, A HANDLING SYSTEM AND A MACHINE FOR PROCESSING LENSES**

(71) Applicant: Mei S.R.L., 24036 Ponte San Pietro (BG) (IT)
(72) Inventor: SONZOGNI, Stefano, 24036 Ponte San Pietro (BG) (IT)
(74) Representative: Kiwit, Benedikt

(57) **Abstract**

The present invention is directed to a gripper device (1) for releasably holding an lens (L), preferably an eyeglass lens, during a lens processing process, comprising two gripping parts (2, 3) facing each other and defining a receiving space (S) extending in a receiving plane (P) therebetween to receive a lens (L), wherein the gripping parts (2, 3) are arranged to be relatively moveable to each other to change the distance (D) therebetween to thus change, i.e. increase or decrease, the size of the receiving space (S) to clamp the received lens (L) between the gripping parts (2, 3), wherein one of the gripping parts (2) comprises at least one gripping element (20), and the other one of the gripping parts (3) comprises two gripping elements (30) being distanced from each other and each facing the at least one gripping element (20) so that the gripping elements (20, 30) are exposed towards the receiving space (S), respectively, wherein the other gripping part (3) comprises a carrier (4), wherein the two gripping elements (30) are both arranged on this carrier (4) in a relatively fixed position with respect to each other, wherein the carrier (4) is swivelly arranged about a swivel axis (X) extending orthogonally to the receiving plane (P), wherein both of the two gripping elements (30) are positioned offset from the swivel axis (X) to rock around the swivel axis (X) when the carrier (4) swivels around the swivel axis (X). The present invention is further directed to a handling system (10) having the gripper device (1) and a handling device (11), as well as a machine (100) having the handlings system (10) and at least one processing unit (101, 102, 103, 104).

## Description

The present invention is directed to a gripper device for releasably holding a lens, a handling system comprising such a gripper device and a handling device for carrying the gripper device in a movable manner, and a machine for processing lenses having the handling system and at least one processing unit to process the lens.

The field of the present application is the manufacturing of lenses, like eyeglass lenses or any other type of optical lenses. The manufacturing is usually done in several steps, e.g. in optical labs. The lenses are usually provided uncut, i.e. as a circular piece of material which is then machined to apply a defined lens function (e.g. a particular prescription or the like). Thereafter, the so machined lens body is finally edged (i.e. the outer circumferential contour is shaped as desired), e.g. to fit the lens into a corresponding eyeglass frame or the like. For machining, the lenses are clamped or grabbed at a circumferential edge thereof, so that the opposite lens surfaces are exposed to be machined. The so machined lens is then often cleaned before being edged. During edging, the lens is given its circumferential contour to fit a corresponding frame. After edging, the lens is usually cleaned (again). At several steps of the processing, the lens is inspected to identify defects, irregularities, or imperfections that could affect the lens' function-ability. Before inspection, the lens is usually cleaned to avoid any loose particles (dust, debris, etc.) be mistaken as optical defects. Hence, both cleaning and inspection thus play a crucial role in ensuring that lenses meet the required specification for clarity, accuracy, and performance. These steps are important in achieving high-quality lenses for various applications, from eyeglasses to cameras to scientific instruments and so on.

During the processing steps, the lenses need to be securely carried to allow for an accurate machining and/or cleaning and/or inspection, and avoid losing lenses due to improper holding.

There are known carriers, which are designed to exactly receive the usually standardized initial circular lens blanc before being edged. After edging, carrying of the respective lenses becomes difficult due to the varying shapes and circumferential contours and thicknesses of the processed lenses, which result in a considerable risk to lose the lenses from the carrier during the transit thereof to the various stages.

Hence, it is an object of the present invention to provide a gripper device, a handling system and a machine, which allow for a secure releasable holding of a lens of any desired shape during a lens processing process (incl. machining, edging, cleaning and/or inspection).

This object is obtained by the subject-matter of the independent claims. The dependent claims study further the central idea of the present invention.

According to a first aspect, the present invention is directed to a gripper device for releasably holding a lens, preferably an eyeglass lens or any other type of optical lens, during a lens processing process (incl. cleaning and/or inspection and/or preferably also machining and/or edging). The gripper device comprises two gripping parts facing each other and defining a receiving space extending in a receiving plane therebetween to receive a lens. The gripping parts are arranged to be relatively movable to each other to change the distance therebetween to thus change, i.e. increase or decrease, the size of the receiving space to clamp the received lens between the gripping parts. One of the gripping parts comprises at least one gripping element. The other one of the gripping parts comprises (at least) two gripping elements being distanced from each other and each facing the at least one gripping element so that all the gripping elements are exposed towards the receiving space, respectively; i.e. so that all the gripping elements together partially delimit the receiving space so as to allow contacting a/the lens received in the receiving space for being clamped by the gripping parts. The other gripping part comprises a carrier, wherein the two gripping elements are both arranged on this carrier in a relatively fixed position with respect to each other. The carrier is thus preferably arranged outside the receiving space. The carrier is swivelly arranged about a swivel axis extending (substantially) orthogonally to the receiving plane. Both of the two gripping elements are positioned offset of the swivel axis to rock around the swivel axis when the carrier swivels around the swivel axis.

The relatively movable gripping parts allow for receiving lenses with different dimensions and diameters. Due to the presence of the respective gripping elements, a defined clamping area or point can be provided thus ensuring a secure holding of the lens. Because one of the gripping parts comprises at least one gripping element and the other of the gripping parts comprises (at least) two gripping elements, there are provided at least three gripping elements thus ensuring a highly accurate gripping of the lens when being clamped therebetween. Moreover, as the carrier with the two gripping elements is swivelly arranged, the carrier can be easily adapted to the shape of the lens to be clamped, so that an accurate and thus a tight grip is ensured. Hence, the gripper device allows for a secure and tight clamping of a lens irrespective of its circumferential contours and/or thickness and the like.

For releasably holding - e.g. grab, clamp and carry - a lens, the gripping parts can be moved to define the size of the receiving space such that it allows for receiving the lens. Therefore, the gripping parts can be moved into an open position or distanced position; e.g. at a maximum distance position and/or such that the receiving space is at its maximum increased size. Then the gripper device can be positioned so that the lens can be received in the receiving space such that the lens is positioned between the gripping parts in a way that all gripping elements face the circumferential edge of the lens to be clamped. Then, the gripping parts can be moved so as to approach each other as well as the lens' edge; i.e. to decrease the size of the receiving space. Since at least one of the gripping elements has the swivelly arranged carrier, said carrier is swivelled around its swivel axis once its gripping elements touch the lens (i.e. the lens' edge), which results in the gripping elements to rock around the swivel axis until both gripping elements which are arranged on the carrier are in contact with the lens (i.e. the lens' edge). Due to their fixed relative position as well as the additional gripping element positioned opposite to the lens with respect to the receiving space, the lens is firmly clamped at three points around its circumference, thus allowing for a secure releasable holding of the lens - irrespective of its shape - during a lens processing process (incl. machining, edging, cleaning and/or inspection).

The one gripping part may also comprise two of the at least one gripping elements being distanced from each other and facing the two gripping elements of the other gripping part. The one gripping part comprises another carrier, wherein the two gripping elements of the one gripping part are arranged on this other carrier in a relatively fixed position with respect to each other. The other carrier is then also swivelly arranged about another swivel axis extending (substantially) orthogonally to the receiving plane, wherein both of the two gripping elements of the one gripping part are positioned offset from the other swivel axis to rock around the other swivel axis when the other carrier swivels around the other swivel axis. Hence, both gripping parts are likewise designed to have the carrier and corresponding two gripping elements, which thus allows for a highly accurate adaptability of the gripper device to any shape of lenses to be clamped.

The one and/or the other gripping part is/are arranged at a gripping finger, respectively, preferably at a distal end thereof. The gripping finger allows for a desired positioning of the gripping parts and may also ensure sufficient size for the receiving space, to thus allow for receiving any desired dimensions of lenses.

The gripping finger of the one and/or the other gripping part is/are movably arranged to change the size of the receiving space. As it is the gripping finger which is movable to change the size of the receiving space, the corresponding movement can be easily applied to the gripping parts via the respective gripping fingers. As the gripping fingers can be designed in any desired way, the movement can thus be easily applied to the gripping parts without affecting or interfering with the receiving space.

The one and/or the other gripping part, preferably the gripping finger of the one and/or the other gripping part if present, is/are movably arranged about a respective pivot axis to change the size of the receiving space. Hence, a defined and thus highly accurate movement can be obtained, thus allowing for a highly precise gripping function. If combined with a corresponding gripping finger, an effective movement can be obtained dependent on the length of the gripping finger or the distance between the pivot axis on the one hand and the gripping part on the other hand.

The pivot axis may be arranged at a proximal end of the respective gripping finger. Hence, a highly effective movability of the gripping finger can be obtained.

The pivot axis may extend (substantially) orthogonally to the receiving plane. Hence, the gripping parts or gripping elements can be effectively moved within a plane in which preferably the receiving space expands, thus allowing for a highly accurate gripping function irrespective of the distance between the gripping parts.

If both the one and the other gripping parts, preferably both their related gripping fingers, are pivotally arranged, their related pivot axes may be offset to one another within the receiving plane. Hence, the receiving space can be accurately defined and the corresponding movability be effectively provided to thus allow for a highly effective clamping function. Also, the receiving space can thus be defined according to the desired lens dimensions of lenses to be processed.

If both the one and the other gripping parts, preferably both their related gripping fingers, are movably arranged, their movements can be connected to each other, preferably such that they both can selectively approach or be distanced from each other. By having the gripping parts or gripping fingers be movably connected, a single movement action can be obtained to effectively allow for a relative movement between the gripping parts. Hence, the size of the receiving space can be easily and effectively changed.

Both the one and the other gripping parts preferably both their related gripping fingers, can be mechanically and movably connected at a connection axis such that the connection axis can be radially shifted to move the gripping parts to change the size of the receiving space. Hence, the connected movability of the gripping parts or gripping fingers can be highly precisely provided, thus allowing for an accurate gripping and clamping function. Also, shifting the connection axis allows for easily applying a moving action to this very single connection axis, thus resulting in a highly effective and easy control function of the gripping parts or gripping fingers.

The connection axis may extend parallel to each pivot axis. Hence, an easy layout and effective clamping function can be obtained.

The connection axis may preferably be arranged between the pivot axes. Hence, the gripper device can be provided in a compact manner, while allowing for an effective control of the moving function and thus a change of the receiving space; preferably with limited application forces.

The gripper device may further comprise an actuator for relatively moving the gripping parts to each other. Hence, the gripping device can be fully and thus effectively equipped even with an actuator, which is thus accurately provided allowing for an easy functionality of the gripper device.

The actuator may be arranged to radially shift the connection axis, preferably having a rod for radially acting upon the connection axis. Hence, the actuator allows for an easy control of the gripper device; preferably with simple and common means, like a rod.

The gripper device may further comprise a spring element to spring bias the gripping parts towards each other. Hence, the gripping parts are provided in a pre-tensioned way towards the closed position or position with the most decreased size of the receiving space, and thus towards a clamping direction, so that a lens is securely clamped by the gripper device, and clamping forces are easily applied; preferably without the need of an additional and/or external supporting clamping force.

The gripping elements can be made from high friction material, preferably from rubber. Hence, high frictional forces can act on the lens, thus allowing for a secure gripping function. If made from rubber or a similar soft high friction material, the gripping elements can be designed to both have high clamping ability and low risk of damaging the lens during handling.

The gripper device may further comprise a base for carrying the gripping parts, preferably via the gripping fingers connected - preferably movably connected - to the base. Hence, the gripper device can be easily applied and manipulated, e.g. for storage, handling, shipping and assembly.

The gripper device may further comprise a sealing barrier, which is arranged to spatially separate the gripping-elements-side of the gripping parts and a distant part of the gripping parts (e.g. at the proximal end of the gripping finger) being distant from the receiving space. Hence, the gripper device can be easily and securely used even in an environment in which, on the lens side, liquids (e.g. for cleaning or machining the lens) are used. Hence, the gripper device, e.g. its mounting section or actuation side, can be protected, thus increasing the life expectancy of the gripper device.

The gripper device may further comprise a connection section for mounting the gripper device to a handling device, preferably a conveyor like a circular conveyor. Hence, the gripper device can be easily attached to a corresponding handling device, thus facilitating its assembly.

The base may comprise the connection section. Hence, the connection can be easily obtained at a stable support, thus allowing for a stable and thus highly accurate gripping and clamping function.

According to another aspect, the present invention is directed to a handling system comprising the gripper device as described herein above as well as a handling device for carrying the gripper device in a movable manner.

Hence, the advantages as just described for the gripper device can be applied to any type of handling system allowing for the gripper device be movably provided. Hence, the effective an accurate gripping function can be applied to any movable handling system.

The gripper device may be mounted to the handling device by the connection section. Hence, the gripper device can be easily attached to the handling device, thus allowing for a stable connection and thus an accurate clamping and manipulating, i.e. handling, of the lenses.

The handling device may comprise a conveyor, preferably a circular conveyor. Hence, the gripper device can be provided to known conveyor systems, so that its function can be easily applied; even for retrofitting of already existing conveyors.

The handling system may further comprise an actuator for relatively moving the gripping parts to each other. Hence, the actuator function can be provided separate from the gripper device, thus making the layout of the gripper device simpler and reducing its number of parts, thus making it more handy.

The actuator may be arranged to radially shift the connection axis, more preferred by having a rod for radially acting upon the connection axis. Hence, the actuator can be provided for easily and effectively applying the respective actuation forces to move the gripping parts. By using a rod, a very simple but effective actuation means can be provided.

According to another aspect, the present invention is directed to a machine for processing lenses. The machine comprises the handling system as described herein above. Moreover, the machine comprises at least one processing unit for processing, preferably machining and/or edging and/or cleaning and/or inspecting, a lens releasably held by the gripper device. The handling device is arranged to move the lens held by the gripper device to the processing unit to allow corresponding processing of the lens while holding the lens with the gripper device.

Further features, embodiments and advantages of the present invention will be described with reference to the drawings of the enclosed figures.
- Fig. 1: shows a machine according to an embodiment of the present invention with a handling system according to an embodiment of the present invention with a gripper device ac-cording to an embodiment of the present invention in a lens transfer mode,
- Fig. 2: shows the machine, handling system, and gripper device of Fig. 1 in a lens processing mode,
- Fig. 3: shows detail A of Fig. 1,
- Fig. 4: shows a perspective view of the gripper device according to Fig. 1,
- Fig. 5: shows a side view of the gripper device of Fig. 4,
- Fig. 6: shows a cross sectional view along line A-A of Fig. 5,
- Fig. 7: shows a cross sectional view along line B-B of Fig. 5,
- Fig. 8: shows another side view of the gripper device of Fig. 4,
- Fig. 9: shows a cross sectional view along line C-C of Fig. 8, and
- Fig. 10: shows a cross sectional view along line D-D of Fig. 8.

The figures show different views of a gripper device 1 according to the present invention for releasably holding a lens L, preferably an eyeglass lens or any other type of optical lenses, during a lens processing process.

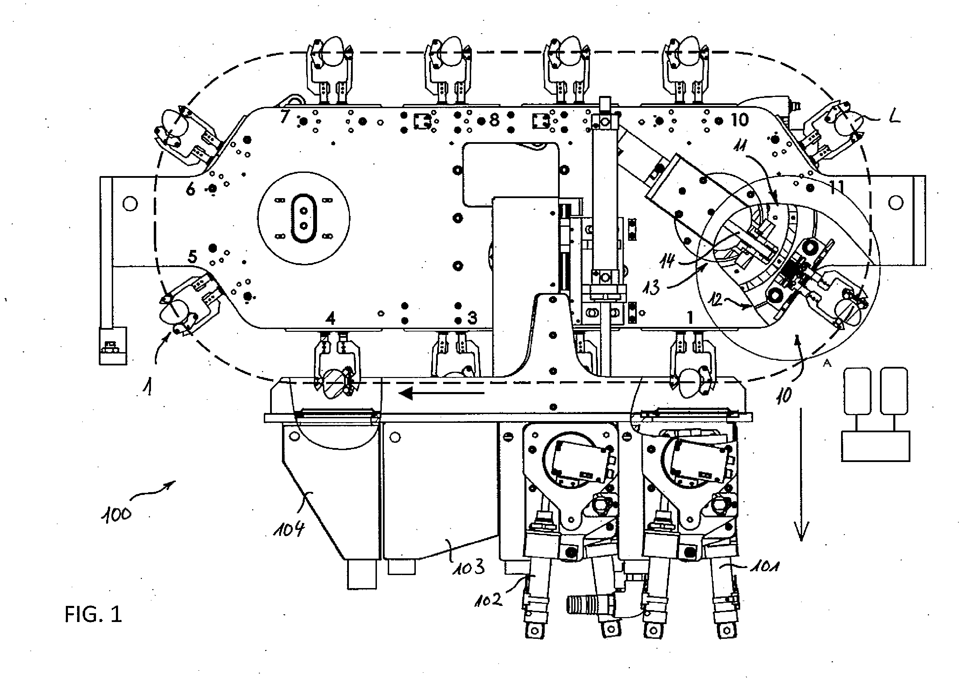

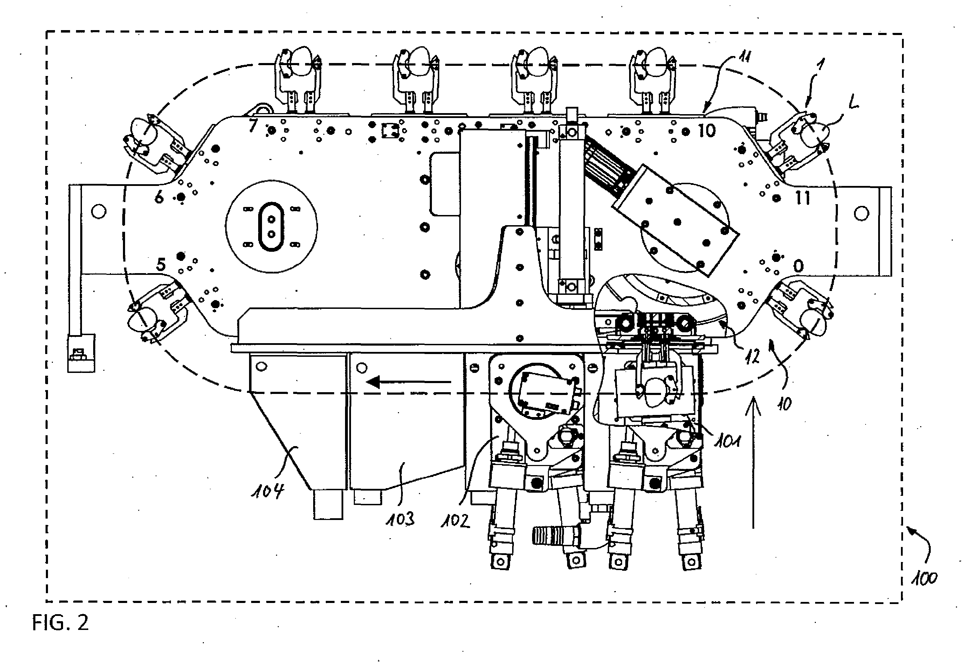

The gripper device 1 comprises two gripping parts 2, 3 facing each other and defining a receiving space S extending in a receiving plane P therebetween to receive the lens L. This is clearly shown in Figs. 1 to 5 and 10.

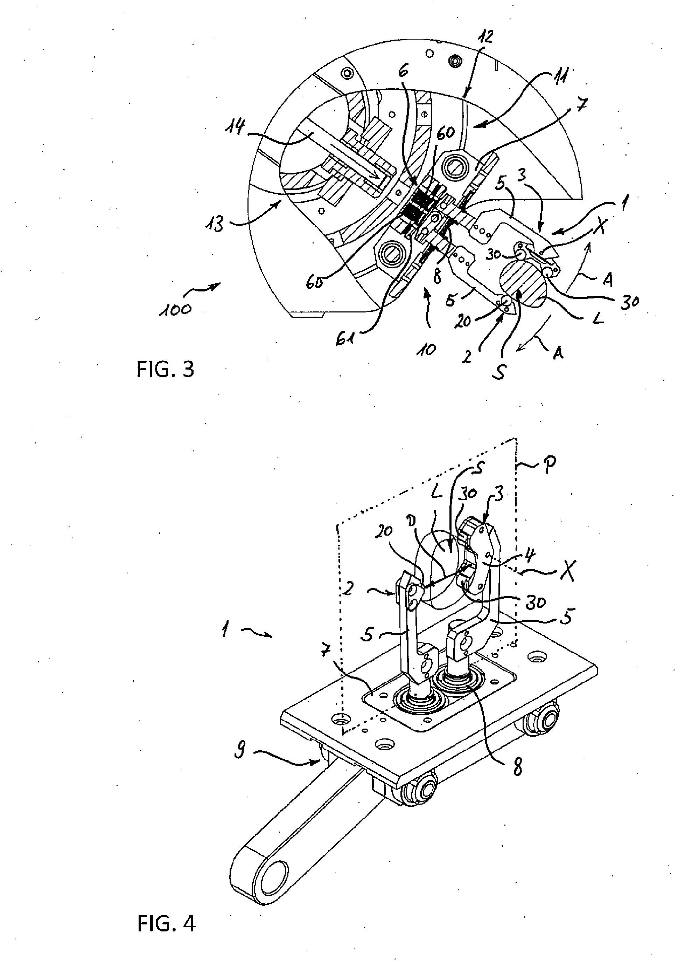

The gripping parts 2, 3 are arranged to be relatively movable to each other to change the distance D therebetween to thus change, i.e. increase or decrease, the size of the receiving space S to allow clamping of the received lens L between the gripping parts 2, 3. The relative movability of the gripping parts 2, 3 is shown by the two arrows A in Fig. 3, for instance.

One of the gripping parts (in the following also referred to as the one gripping part) 2 comprises at least one gripping element 20, as derivable from Figs. 1 to 5 and 10.

The other one of the gripping parts (in the following also referred to as the other gripping part) 3 comprises two gripping elements 30 being distanced from each other (see Figs. 3 to 5 and 10) and each facing the at least one gripping element 20 so that the gripping elements 20, 30 are exposed towards the receiving space S, respectively; i.e. so that the gripping elements 20, 30 together partially delimit the receiving space S so as to allow to contact a lens L received in the receiving space S for being clamped by the gripping parts 2, 3.

The gripping elements 20, 30 are preferably made from high friction material, like rubber.

The other gripping part 3 may comprise a carrier 4. The two gripping elements 30 are both arranged on this carrier 4 in a relatively fixed position with respect to each other.

The carrier 4 may be swivelly arranged about a swivel axis X extending substantially orthogonally to the receiving plane P. Both of the two gripping elements 30 are positioned offset from the swivel axis X to rock around the swivel axis X when the carrier 4 swivels around the swivel axis X.

As shown in the figures, the at least one gripping element 20 is here shown as only one gripping element. Alternatively, it is also possible that the one gripping part 2 may comprise two of the at least one gripping elements 20 being distanced from each other and facing the two gripping elements 30 of the other gripping part 3. The one gripping part 2 may then comprise another carrier (not shown), wherein the two gripping elements 20 of the one gripping part 2 are arranged on this other carrier in a relatively fixed position with respect to each other. The other carrier is then also swivelly arranged about another swivel axis (not shown) extending substantially orthogonally to the receiving plane P, wherein both of the two gripping elements 20 of the one gripping part 2 are positioned offset from the other swivel axis to rock around the other swivel axis when the other carrier swivels around the other swivel axis. In other words, the two gripping parts 2, 3 can both be designed or provided in a similar or identical way.

The one and/or the other gripping part 2, 3 is/are arranged at a gripping finger 5, respectively, preferably at a distal end 50 thereof.

The gripping finger 5 of the one and/or the other gripping part 2, 3 is/are movably arranged to change the size of the receiving space S. In the shown embodiment, both the gripping fingers 5 of both the one and the other gripping part 2, 3 are accordingly movingly arranged to change the size of the receiving space S.

The one and/or the other gripping part 2, 3 and/or the respective gripping finger(s) 5 can be movably arranged about respective pivot axis Y to change the size of the receiving space S. In the shown embodiment, both gripping parts 2, 3 or gripping fingers 5 have such a pivot axis Y.

The pivot axis Y can be arranged at a proximal end 51 of the respective gripping finger 5, as exemplarily shown in Figs. 3, 5 and 9.

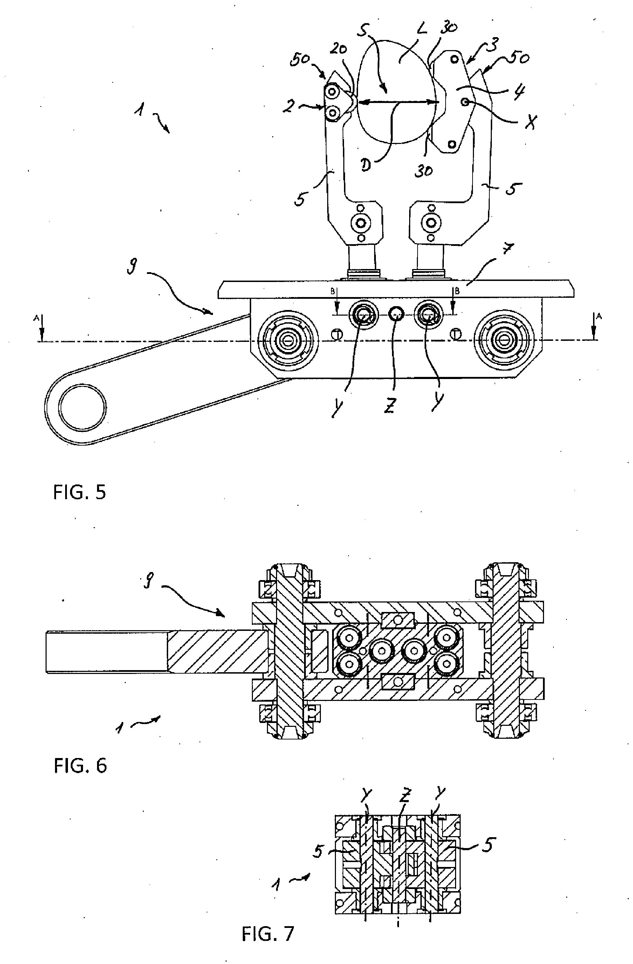

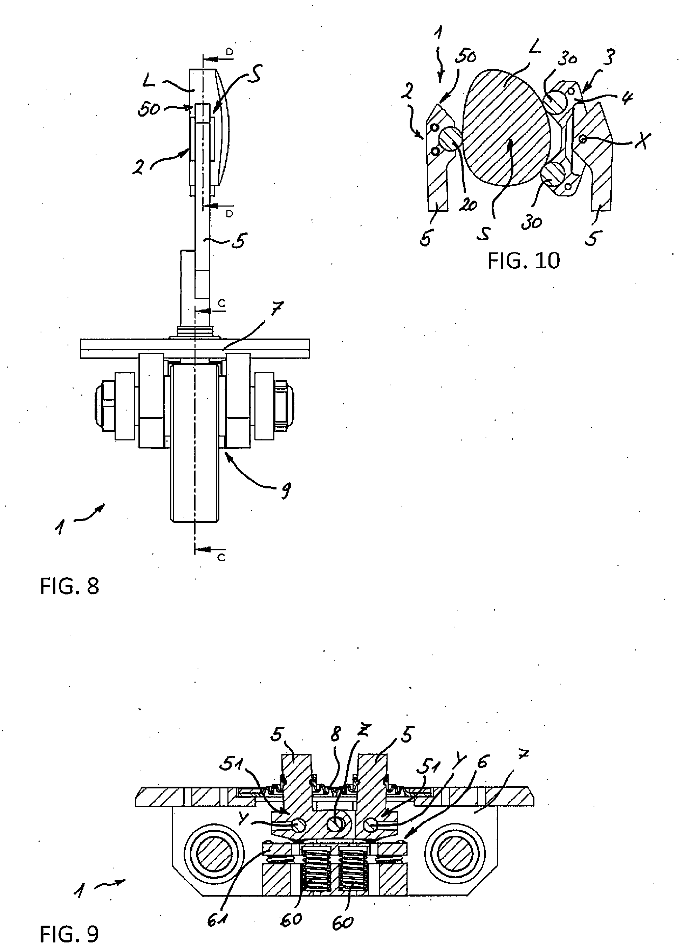

The pivot axis Y may extend substantially orthogonally to the receiving space S or to the receiving plane P, as can be derived from Figs. 5 and 9.

If both the one and the other gripping parts 2, 3, preferably both their related gripping fingers 5, are pivotally arranged, there pivot axis Y can be offset to one another within the receiving plane P, as derivable from Figs. 3, 5 and 9.

If both the one and the other gripping parts 2, 3, preferably both their related gripping fingers 5, are movably arranged, their movements can be connected to each other, preferably such that they both can selectively either approach or be distanced from each other.

Both the one and the other gripping parts 2, 3, preferably both their related gripping fingers 5, can be mechanically and movably connected at a connection axis Z such that the connection axis Z can be radially shifted to move the gripping parts 2, 3 to change the size of the receiving space S.

The connection axis Z may extend parallel to each pivot axis X. The connection axis Z may preferably be arranged between both the pivot axes X, as also derivable from Figs. 3 and 9.

The gripper device 1 may further comprise an actuator for relatively moving the gripping parts 2, 3 to each other. The actuator may be arranged to radially shift the connection axis Z, preferably by having a rod for radially acting upon the connection axis Z.

The gripper device 1 may further comprise a spring element 6 to spring-bias the gripping parts 2, 3 towards each other. This is exemplarily shown in Figs. 3 and 9. Therein, springs 60 act upon a plate 61 which then acts upon here both the fingers 5 or gripping parts 2, 3 to thus spring-bias them towards each other; i.e. in a closed position where they define the most decreased size of the receiving space S. Hence, clamping of a lens L can be obtained without any additional active and external application forces.

The gripper device 1 may further comprise a base 7 for carrying the gripping parts 2, 3, preferably via the gripping fingers 5 connected - preferably movable connected - to the base 7. This is exemplarily derivable from Figs. 4 to 10.

The gripper device 1 may further comprise a sealing barrier 8 arranged to spatially separate the gripper parts 2, 3 or its gripping elements 20, 30 and a distant part of the gripper device 1 - e.g. at a proximal end 51 of the gripping fingers 5 - being distant from the receiving space S. This is exemplarily derivable from Figs. 4 and 9.

The gripper device 1 may further comprise a connection section 9 for mounting the gripper device 1 to a handling device 11, preferably a conveyor like a circular conveyor. The base 7 may comprise the connection section 9.

With respect to Figs. 1 to 3, a handling system 10 according to the present invention is described.

The handling system 10 comprises the gripper device 1 according to the present invention as well as the handling device 11 for carrying the gripper device 1 in a movable manner.

The gripper device 1 may be mounted to the handling device 11 by the connection section 9, as exemplarily shown in Fig. 3.

The handling device 11 may comprise a conveyor 12, preferably a circular conveyor.

The handling system 10 may further comprise an actuator 13 for relatively moving the gripping parts 2, 3 to each other. The actuator 13 may preferably be arranged to radially shift the connection axis Z, more preferred by having a rod 14 for radially acting upon the connection axis Z, as exemplarily shown in Fig. 3.

With respect to Figs. 1 to 3, a machine 100 for processing lenses L according to the present invention is described. The machine 100 comprises the handling system 10 with the gripper device 1. The machine 100 further comprises at least one processing unit 101, 102, 103, 104 for processing, preferably machining and/or edging and/or cleaning and/or inspecting, a lens L releasably held by the gripper device 1. The handling device 11 is arranged to move the lens L held by the gripper device 1 to the (at least one) processing unit 101, 102, 103, 104 to allow corresponding processing of the lens L while the leans L is held with the gripper device 1.

The present invention is not limited by the embodiments described herein above, as long as being covered by the appended claims.

## Claims

1. Gripper device (1) for releasably holding an lens (L), preferably an eyeglass lens, during a lens processing process, comprising two gripping parts (2, 3) facing each other and defining a receiving space (S) extending in a receiving plane (P) therebetween to receive a lens (L),
wherein the gripping parts (2, 3) are arranged to be relatively moveable to each other to change the distance (D) therebetween to thus change, i.e. increase or decrease, the size of the receiving space (S) to clamp the received lens (L) between the gripping parts (2, 3),
wherein one of the gripping parts (2) comprises at least one gripping element (20), and the other one of the gripping parts (3) comprises two gripping elements (30) being distanced from each other and each facing the at least one gripping element (20) so that the gripping elements (20, 30) are exposed towards the receiving space (S), respectively, wherein the other gripping part (3) comprises a carrier (4), wherein the two gripping elements (30) are both arranged on this carrier (4) in a relatively fixed position with respect to each other,
wherein the carrier (4) is swivelly arranged about a swivel axis (X) extending orthogonally to the receiving plane (P), wherein both of the two gripping elements (30) are positioned offset from the swivel axis (X) to rock around the swivel axis (X) when the carrier (4) swivels around the swivel axis (X).

2. Gripper device (1) according to claim 1, wherein the one gripping part (2) comprises two of the at least one gripping elements (20) being distanced from each other and facing the two gripping elements (30) of the other gripping part (3),
wherein the one gripping part (2) comprises another carrier, wherein the two gripping elements (20) of the one gripping part (2) are arranged on this other carrier in a relatively fixed position with respect to each other,
wherein the other carrier is swivelly arranged about another swivel axis extending orthogonally to the receiving plane (P), wherein both of the two gripping elements (20) of the one gripping part (2) are positioned offset from the other swivel axis to rock around the other swivel axis when the other carrier swivels around the other swivel axis.

3. Gripper device (1) according to any one of the preceding claims, wherein the one and/or the other gripping part (2, 3) is/are arranged at a gripping finger (5), respectively, preferably at a distal end (50) thereof,
wherein preferably the gripping finger (5) of the one and/or the other gripping part (2, 3) is/are moveably arranged to change the size of the receiving space (S).

4. Gripper device (1) according to any one of the preceding claims, wherein the one and/or the other gripping part (2, 3), preferably the gripping finger (5) of the one and/or the other gripping part (2, 3) if present, is/are moveably arranged about a respective pivot axis (Y) to change the size of the receiving space (S).

5. Gripper device (1) according to the preceding claim, wherein the pivot axis (Y) is arranged at a proximal end (51) of the respective gripping finger (5), and/or
wherein the pivot axis (Y) extends orthogonally to the receiving plane (P), and/or wherein, if both the one and the other gripping parts (2, 3), preferably both their related gripping fingers (5), are pivotally arranged, their pivot axes (Y) are offset to one another within the receiving plane (P).

6. Gripper device (1) according to any one of the preceding claims, wherein, if both the one and the other gripping parts (2, 3), preferably both their related gripping fingers (5), are moveably arranged, their movements are connected to each other, preferably such that they both can selectively approach or be distanced from each other,
wherein preferably both the one and the other gripping parts (2, 3), more preferred both their related gripping fingers (5), are mechanically and moveably connected at a connection axis (Z) such that the connection axis (Z) can be radially shifted to move the gripping parts (2, 3) to change the size of the receiving space (S),
wherein preferably the connection axis (Z) extends parallel to each pivot axis (Y), and wherein the connection axis (Z) preferably is arranged between the pivot axes (Y).

7. Gripper device (1) according to any one of the preceding claims, further comprising an actuator for relatively moving the gripping parts (2, 3) to each other,
wherein preferably the actuator is arranged to radially shift the connection axis (Z) if present, preferably by having a rod for radially acting upon the connection axis (Z),
and/or
the gripper device (1) further comprising a spring element (6) to spring-bias the gripping parts (2, 3) towards each other.

8. Gripper device (1) according to any one of the preceding claims, wherein the gripping elements (20, 30) are made from high friction material, preferably rubber.

9. Gripper device (1) according to any one of the preceding claims, further comprising:
• a base (7) for carrying the gripping parts (2, 3), preferably via the gripping fingers (5) connected - preferably moveably connected - to the base (7), and/or
• a connection section (9) for mounting the gripper device (1) to a handling device (11), preferably a conveyor (12) like a circular conveyor
wherein preferably the base (7) comprises the connection section (9).

10. Gripper device (1) according to any one of the preceding claims, further comprising a sealing barrier (8) arranged to spatially separate the gripping parts (2, 3) and a distant part of the gripping parts (2, 3) being distant from the receiving space (S).

11. Handling system (10) comprising:
a gripper device (1) according to any one of the preceding claims, and
a handling device (11) for carrying the gripper device (1) in a moveable manner.

12. Handling system (10) according to the preceding claim, wherein the gripper device (1) is mounted to the handling device (11) by the connection section (9).

13. Handling system (10) according to any one of the two preceding claims, wherein the handling device (11) comprises a conveyor (12), preferably a circular conveyor.

14. Handling system (10) according to any one of the three preceding claims, further comprising an actuator (13) for relatively moving the gripping parts (2, 3) to each other, wherein the actuator (13) preferably is arranged to radially shift the connection axis (Z), more preferred by having a rod (14) for radially acting upon the connection axis (Z).

15. A machine (100) for processing lenses (L), comprising:
• a handling system (10) according to any one of claims 11 to 14, and
• at least one processing unit (101, 102, 103, 104) for processing, preferably machining and/or edging and/or cleaning and/or inspecting, a lens (L) releasably held by the gripper device (1),
wherein the handling device (11) is arranged to move the lens (L) held by the gripper device (1) to the processing unit (101, 102, 103, 104) to allow corresponding processing of the lens (L) while holding the lens (L) with the gripper device (1).
